# EUROPÄISCHE PATENTSCHRIFT

(11) **EP 2 780 157 B1**
(45) Veröffentlichungstag und Bekanntmachung des Hinweises auf die Patenterteilung: **27.07.2022**
(21) Anmeldenummer: 12790502.4
(22) Anmeldetag: 12.11.2012
(51) Int. Cl.: B29C 73/30, B29C 73/34, B29C 35/02

(54) **HEIZEINRICHTUNG ODER VERFAHREN ZUR REPARATUR ODER HERSTELLUNG VON KOMPONENTEN EINER WINDENERGIEANLAGE UND TEILEN DAVON**
HEATING DEVICE OR METHOD FOR REPAIRING OR PRODUCING COMPONENTS OF A WIND POWER PLANT AND PARTS THEREOF
DISPOSITIF DE CHAUFFAGE OU PROCÉDÉ PERMETTANT DE RÉPARER OU DE FABRIQUER DES ÉLÉMENTS D'UNE ÉOLIENNE ET DE PIÈCES DE LADITE ÉOLIENNE

(30) Priorität: 16.11.2011 DE 102011086453
(43) Veröffentlichungstag der Anmeldung: 24.09.2014
(73) Patentinhaber: Wobben Properties GmbH, 26607 Aurich (DE)
(72) Erfinder: MUSCHKE, Sven, 26419 Schortens (DE); HIMSEL, Steffen, 26605 Aurich (DE); RAHMANN, Uwe, 26629 Mittegroßefehn (DE)
(74) Vertreter: Eisenführ Speiser
(86) Internationale Anmeldenummer: PCT/EP2012/072393
(87) Internationale Veröffentlichungsnummer: WO 2013/072276

(56) Entgegenhaltungen:
- DE-A1- 4 019 744
- FR-A1- 2 950 079

## Beschreibung

Die vorliegende Erfindung betrifft eine Heizeinrichtung zur Verwendung bei der Reparatur oder Herstellung von Komponenten einer Windenergieanlage, ein Verfahren zur Reparatur oder Herstellung von Komponenten einer Windenergieanlage.

Komponenten von modernen Windenergieanlagen wie beispielsweise die Rotorblätter werden heutzutage zumindest teilweise aus glasfaserverstärktem Kunststoff (GFK), kohlefaserverstärktem Kunststoff (CFK) oder dergleichen hergestellt. Bei der Herstellung sowie bei der Reparatur beispielsweise der Rotorblätter wird Wärme benötigt, die durch eine Heizeinheit zur Verfügung gestellt werden kann.

Hierbei muss die Wärme, die durch die Heizeinheit erzeugt wird, möglichst verlustfrei an beispielsweise das Rotorblatt bzw. andere Komponenten der Windenergieanlage übertragen werden.

DE 40 19 744 A1 offenbart eine Heizeinrichtung und ein Verfahren zur Reparatur einer Komponente aus Verbundwerkstoff.

Es ist eine Aufgabe der vorliegenden Erfindung, eine verbesserte Heizeinrichtung vorzusehen, welche ebenfalls eine verbesserte Übertragung der erzeugten Wärme an die zu reparierende oder herzustellende Komponente ermöglicht.

Diese Aufgabe wird durch eine Heizeinrichtung nach Anspruch 1, ein Verfahren nach Anspruch 10 sowie durch eine Windenergieanlage gemäß Anspruch 10 gelöst.

Somit wird eine Heizeinrichtung zur Verwendung bei der Reparatur oder Herstellung einer Komponente einer Windenergieanlage, insbesondere eines Rotorblattes einer Windenergieanlage, gemäß Anspruch 1 und ein Verfahren zur Reparatur oder Herstellung einer Komponente einer Windenergieanlage, insbesondere eines Rotorblattes einer Windenergieanlage gemäß Anspruch 5 vorgesehen. Die Heizeinrichtung weist eine Silikonmatte mit mindestens einem umlaufenden, zu einer Seite offenen Kanal und einen Vakuumschlauch in dem mindestens einen Kanal auf. Der mindestens eine umlaufende Kanal teilt die Matte in einen ersten und zweiten Abschnitt auf. Eine Heizeinheit ist im Bereich des ersten Abschnittes vorgesehen. Die Luft im Bereich des ersten Abschnittes kann durch den Vakuumschlauch in dem mindestens einen Kanal abgesaugt werden.

Gemäß einem Aspekt der vorliegenden Erfindung weist die Heizeinrichtung mindestens einen ersten Temperatursensor im Bereich des ersten Abschnitts auf. Ferner weist die Heizeinrichtung eine Steuereinheit zum Steuern der Heizeinheit in Abhängigkeit der durch den ersten Temperatursensor erfassten Temperatur auf.

Gemäß einem weiteren Aspekt der vorliegenden Erfindung weist die Heizeinrichtung einen Vakuumanschluss-Ansaugstutzen zum Anschließen eines Schlauches an eine Vakuumpumpe auf, um die Luft im Bereich des ersten Abschnittes abzusaugen.

Die Erfindung betrifft den Gedanken, eine Heizeinrichtung mit einer (Silikon)matte bzw. einer Silikonschicht vorzusehen, wobei in der Silikonschicht eine Heizeinheit und mindestens ein Kanal mit einem Vakuumschlauch vorgesehen ist. Durch den Vakuumschlauch kann ein Abschnitt der Heizeinrichtung unter Vakuum gesetzt werden, so dass dieser Abschnitt fest an einer zu reparierenden bzw. herzustellenden Komponente klebt bzw. daran befestigt ist. Vorzugsweise weist die Heizeinrichtung einen Vakuumanschlussstutzen bzw. einen Ansaugstutzen auf, an welchen ein Schlauch einer Vakuumpumpe anschließbar ist. Der Anschlussstutzen ist wiederum mit dem Vakuumschlauch bzw. dem ersten nach innen offenen Kanal verbunden. Der Kanal bzw. der mindestens eine Kanal umgibt einen ersten Abschnitt. Innerhalb dieses Abschnittes ist die Heizeinheit vorgesehen. Optional kann mindestens ein Temperatursensor in dem ersten Abschnitt vorgesehen werden. Bei der Aktivierung der Vakuumpumpe wird die Luft im Bereich des ersten Abschnitts (wenn die Heizeinrichtung auf einem Bauteil platziert wird) herausgesogen, so dass der erste Abschnitt an dem Bauteil klebt.

Optional kann eine Steuereinheit an der Heizeinrichtung vorgesehen sein, welche sowohl die Vakuumpumpe als auch die Heizeinheit steuert. Die Steuerung der Steuereinheit kann beispielsweise in Abhängigkeit der Ausgangssignale des mindestens einen Temperatursensors erfolgen. Der Vakuumschlauch kann beispielsweise als ein Spiralschlauch ausgestaltet sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Draufsicht auf eine Heizeinrichtung gemäß einem ersten Ausführungsbeispiel,
- Fig. 2: zeigt einen Querschnitt A-A durch die Heizeinrichtung gemäß dem ersten Ausführungsbeispiel,
- Fig. 3: zeigt eine Ansicht der Unterseite der Heizeinrichtung gemäß dem ersten Ausführungsbeispiel,
- Fig. 4: zeigt eine schematische Ansicht einer Windenergieanlage gemäß einem zweiten Ausführungsbeispiel,
- Fig. 5: zeigt eine schematische Ansicht einer Unterseite einer Heizeinrichtung gemäß einem dritten Ausführungsbeispiel,
- Fig. 6: zeigt eine schematische Ansicht der Außenseite der Heizeinrichtung gemäß dem dritten Ausführungsbeispiel,
- Fig. 7: zeigt eine schematische Schnittansicht einer Heizeinrichtung gemäß einem dritten Ausführungsbeispiel,
- Fig. 8a und 8b: zeigen eine schematische Darstellung einer Heizeinrichtung gemäß einem vierten Ausführungsbeispiel, und
- Fig. 9: zeigt eine schematische Schnittansicht einer Heizeinrichtung gemäß einem fünften Ausführungsbeispiel.

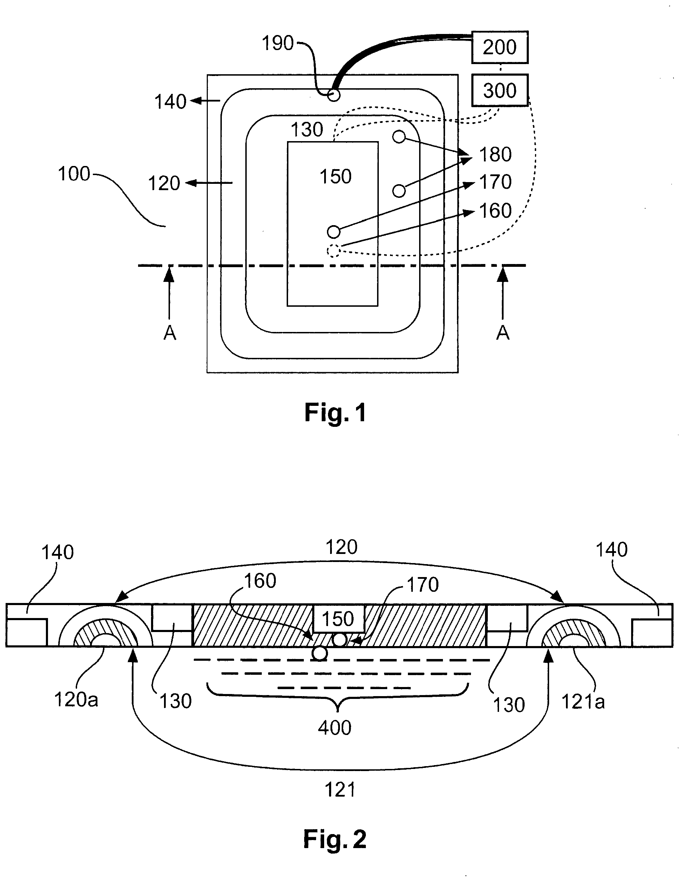

Fig. 1 zeigt eine schematische Draufsicht auf eine Heizeinrichtung gemäß einem ersten Ausführungsbeispiel. Die Heizeinrichtung 100 gemäß dem ersten Ausführungsbeispiel weist eine Matte 110, z. B. eine Silikonmatte, mit mindestens einem Kanal 120 auf, der einen ersten Abschnitt 130 umgibt. Im Bereich des ersten Abschnittes 130 ist eine Heizeinheit 150 vorgesehen. Ein zweiter Abschnitt 140 ist außerhalb des Kanals 120 vorgesehen. In dem Kanal 120 ist ein Vakuumschlauch mit einer Mehrzahl von Öffnungen in dem offenen Ende des Kanals 120 vorgesehen. Des Weiteren weist die Heizeinrichtung 100 einen Vakuumanschluss bzw. einen Ansaugstutzen 190 auf, welcher über einen Schlauch 210 mit einer Vakuumpumpe 200 verbunden werden kann. Optional kann mindestens ein erster Temperatursensor 170 im ersten und/oder zweiten Abschnitt 130, 140 vorgesehen sein. Dieser Temperatursensor 170 dient dazu, die Temperatur in, an oder in dem Bereich der Heizeinheit 150 zu erfassen. Ein zweiter externer Temperatursensor 160 kann zwischen der Heizeinheit 150 und einer Reparaturstelle oder einer zu behandelnden Stelle positioniert werden, um die Temperatur direkt auf oder in der Nähe der Reparaturstelle zu erfassen. Die Heizeinrichtung kann ferner eine Steuereinheit 300 aufweisen, welche mit der Heizeinheit 150 und/oder der Vakuumpumpe 200 verbunden ist und den Betrieb der Vakuumpumpe 200 und/oder den Betrieb der Heizeinheit 150 steuern kann.

Optional kann die (Silikon)matte 110 im Bereich des ersten Abschnittes 130 zwei Öffnungen 180 aufweisen, welche als ein Anschluss für ein Infusionsharz dienen können. Insbesondere bei der Reparatur von Rotorblättern einer Windenergieanlage oder anderen Elementen wie z. B. der Gondel der Windenergieanlage ist es oftmals notwendig, dass die zu reparierende Stelle (bzw. die Reparaturstelle) oder eine zu behandelnde Stelle 400 in einem Infusionsverfahren behandelt wird, wobei z. B. ein Harz auf die Reparaturstelle aufgebracht wird und dann aushärten muss. Dazu wird das Harz durch die Öffnungen 180 in den ersten Abschnitt 130 eingeleitet.

Die Heizeinrichtung wird auf einem zu reparierenden bzw. herzustellenden Element (Reparaturstelle 400) platziert, die Vakuumpumpe 200 wird aktiviert, so dass die Luft zwischen der (Silikon)matte 110 in dem ersten Abschnitt 130 und dem zu reparierenden oder herzustellenden Element abgesaugt wird. Somit wird ein Vakuum im Bereich unterhalb des ersten Abschnitts 130 erzeugt. Dies ist insbesondere vorteilhaft, weil dadurch Luftblasen in dem Bereich des ersten Abschnittes bzw. darunter vermieden werden können. Der Vakuumschlauch 121 innerhalb des Kanals 120 kann beispielsweise als ein Spiralschlauch ausgebildet sein, so dass Öffnungen in dem Schlauch mit der offenen Seite des Kanals übereinstimmen, so dass Luft, die sich im Bereich des ersten Abschnitts befindet, abgesaugt werden kann.

Gemäß dem ersten Ausführungsbeispiel wird somit eine Heizeinrichtung mit einer Matte 110, z. B. einer Silikonmatte, mindestens einem ersten umlaufenden Kanal 120 und mindestens einem Heizelement 150 (z. B. ein elektrisches Heizelement) vorgesehen. Der umlaufende Kanal 120 teilt die (Silikon)matte 110 in einen ersten und zweiten Abschnitt 130, 140 auf. In dem mindestens einen Kanal ist ein Vakuumschlauch 121 vorgesehen, welcher an eine Vakuumpumpe 200 anschließbar ist. Mittels des Vakuumschlauches 121 in dem mindestens einen Kanal 120 kann Luft im Bereich des ersten Abschnitts 130 abgesaugt werden, so dass ein Vakuum im Bereich des ersten Abschnittes 130 (zwischen der Silikonmatte und der zu bearbeitenden Komponente) vorhanden ist.

Fig. 2 zeigt einen Querschnitt A-A der Heizeinrichtung gemäß dem ersten Ausführungsbeispiel. Die Heizeinrichtung weist eine Matte 110, z. B. eine Silikonmatte, mit mindestens einem Kanal 120 auf, der die Matte (110) in einen ersten Abschnitt 130 (vom Kanal umschlossen) und einen zweiten Abschnitt 140 (außerhalb des Kanals) aufteilt. Im Bereich des ersten Abschnittes 130 ist eine Heizeinheit 150 vorgesehen. In dem umlaufenden Kanal 120 mit einem offenen Ende 120a ist ein Vakuumschlauch 121 vorgesehen, welcher Öffnungen 121a zum offenen Ende 120a des Kanals 120 aufweist. Ferner ist optional ein erster Temperatursensor 170 in bzw. an der Heizeinheit 150 und ein zweiter externer Temperatursensor 160 zwischen der Reparaturstelle oder der zu behandelnden Stelle 400 vorgesehen.

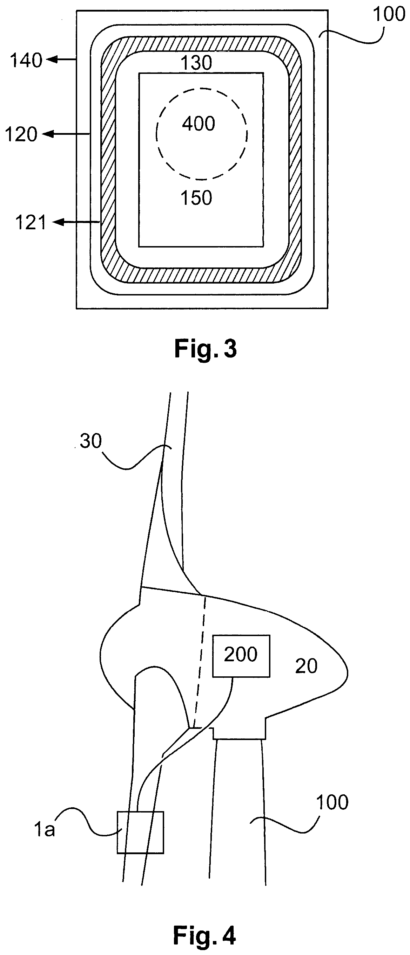

Fig. 3 zeigt eine Draufsicht auf die Heizeinrichtung gemäß dem ersten Ausführungsbeispiel. Die Heizeinrichtung weist eine Matte 110 und mindestens einen umlaufenden Kanal 120 auf, welcher die Matte 110 in einen ersten und zweiten Abschnitt 130, 140 aufteilt. In dem Kanal 120 ist ein Vakuumschlauch 121 vorgesehen, der beispielsweise als ein Spiralschlauch ausgebildet sein kann. Wenn die Vakuumpumpe 200 aktiviert wird, dann wird die Luft zwischen dem ersten Abschnitt 130 und einem zu bearbeitenden Bauteil (Reparaturstelle oder zu behandelnde Stelle 400) extrahiert, so dass ein Vakuum im Bereich des ersten Abschnitts 130 vorhanden ist. Durch das Vakuum im Bereich des ersten Abschnitts 130 kann die Matte an dem zu bearbeitenden Bauteil "kleben". Durch die Vakuumpumpe 200 (Fig. 1) wird die Luft im Bereich des ersten Abschnitts 130 abgesaugt.

Wenn die Heizeinrichtung gemäß dem ersten Ausführungsbeispiel für eine Reparatur bzw. einen Service eines Rotorblattes der Windenergieanlage verwendet wird, dann kann die Matte 110 beispielsweise über Spanngurte an dem Rotorblatt befestigt werden. Anschließend wird mittels der Vakuumpumpe 200, welche über die Steuereinheit 300 gesteuert werden kann, die Luft im Bereich des ersten Abschnitts abgesaugt, so dass dort ein Vakuum entsteht und die Silikonmatte an dem Rotorblatt kleben bleibt.

Die Erfindung betrifft ebenfalls gemäß einem zweiten Ausführungsbeispiel eine Heizeinheit, beispielsweise wie sie gemäß dem ersten Ausführungsbeispiel beschrieben ist, und eine Steuereinheit zum Steuern der Heizeinheit. Die Heizeinheit 150 weist mindestens einen Temperatursensor 170 in dem ersten Abschnitt 130 sowie optional einen zweiten Temperatursensor 160 auf, welcher außerhalb des ersten Abschnittes bzw. auf der Außenseite des ersten Abschnittes (d. h. zwischen Heizeinheit und Reparaturstelle) vorgesehen ist. Dieser zweite Temperatursensor kann als eine redundante Sicherheitsmaßnahme dienen. Die Heizeinheit weist ferner eine Steuereinheit 300 auf, welche mittels des mindestens einen ersten und/oder zweiten Temperatursensors 170 den Temperaturverlauf beispielsweise bei der Reparatur eines Rotorblattes einer Windenergieanlage überwacht, beispielsweise wenn an einer zu reparierenden Stelle eines Rotorblattes einer Windenergieanlage eine Matrix aufgetragen wird, welche dann anschließend mittels der Heizeinrichtung erwärmt wird, um die Matrix auszuhärten. Mittels des zweiten Temperatursensors 160 (zwischen der Heizeinheit und der Reparaturstelle) kann dabei die tatsächliche Temperatur der Matrix bzw. des Hörers in oder an der Reparaturstelle erfasst werden. Dies ermöglicht eine Erkennung einer Exothermie, so dass die Energiezufuhr bzw. Wärmezufuhr mittels der Heizeinheit gedrosselt werden kann. Hierbei kann die Heizleistung der Heizeinheit reduziert werden oder die Heizeinheit 150 kann beispielsweise deaktiviert werden, wenn ein Temperaturschwellwert überschritten wird.

Durch das Vorsehen von zwei unabhängigen Temperatursensoren ist eine redundante Temperaturüberwachung vorgesehen, d. h. wenn einer der Temperatursensoren fehlerhafte Werte misst, dann kann die Temperaturüberwachung auf Basis der Messwerte des anderen Temperatursensors erfolgen. Damit kann sichergestellt werden, dass es zu keiner Zeit zu einer Übertemperatur an der zu behandelnden Stelle kommt. Somit kann ferner vermieden werden, dass das zu behandelnde Bauteil oder die Heizeinheit beschädigt werden. Ferner kann ein Abkochen der Reparaturstelle durch eine zu hohe Reaktionstemperatur vermieden werden.

Gemäß einem Aspekt der vorliegenden Erfindung werden vorzugsweise mindestens zwei unabhängige Sensoren (Temperatursensoren 160, 170) vorgesehen und an die Steuereinheit 300 angeschlossen. Diese beiden Temperatursensoren 160, 170 sind vorzugsweise als unabhängige Sensoren ausgestaltet, um einen fehlerfreien Ablauf der Temperierung der zu behandelnden Stelle oder der Reparaturstelle überwachen zu können. Die Steuereinheit 300 empfängt die Ausgangssignale des ersten und zweiten Temperatursensors 170, 160. Der erste Temperatursensor 170 ist in, an oder im Bereich des Heizelementes 150 vorgesehen. Vorzugsweise ist der erste Temperatursensor 170 mittig in oder an der Heizeinheit vorgesehen. Damit überwacht dieser erste Temperatursensor 170 die Temperaturen, welche beim Heizprozess direkt in oder an der Heizeinheit 150 entstehen.

Der zweite Temperatursensor 160 kann beispielsweise zwischen der Reparaturstelle (oder zu behandelnden Stelle) 400 und der Heizeinheit 150 vorgesehen sein. Dieser zweite Temperatursensor 160 kann somit als ein externer (Temperatur)sensor ausgestaltet sein und dient dazu, die (exakte) Temperatur an der Reparaturstelle bzw. der zu behandelnden Stelle zu erfassen.

Die Steuereinheit 300 dient zur Steuerung einer Zeit- und Temperaturabfolge. Optional kann die Steuereinheit mehrere Zeit- und/oder Temperaturfolgen aufweisen. Die Zeit- und Temperaturfolge kann angepasst werden, soweit dies erforderlich ist.

Gemäß der Erfindung kann beispielsweise nach Auftragen der Matrix zur Reparatur oder Herstellung eines Elementes die Matrix mittels der Heizeinheit 150 auf eine Temperatur von 40°C erwärmt werden. Diese Temperatur kann optional beispielsweise für zwei oder drei Stunden aufrecht erhalten werden. Hierbei wird das Temperatursignal des ersten und/oder zweiten Temperatursensors 170, 160 überwacht, um eine Exothermieerkennung zu ermöglichen. Wenn beispielsweise die Temperatur über 40°C steigt, dann wird die Heizleistung der Heizeinheit 150 reduziert bzw. die Heizeinheit wird ausgeschaltet. Die Heizeinheit 150 wird danach erst wieder aktiviert, wenn die durch den ersten und/oder zweiten Temperatursensor 170, 160 gemessene Temperatur einen Schwellwert unterschreitet. Anschließend kann die Matrix beispielsweise auf 80°C erwärmt werden, indem die Heizeinheit für einige Stunden weiter betrieben wird.

Als eine Sicherheitsvorkehrung kann die Steuerung optional deaktiviert werden, wenn der erste oder zweite Temperatursensor defekt ist. Der zweite Temperatursensor kann als redundanter Temperatursensor vorgesehen sein, um eine Exothermie zu erfassen.

Die Steuereinheit 300 kann, um ein Aushärten des auf die Reparaturstelle aufgetragenen Harzes zu steuern, beispielsweise zwei Temperaturmodi aufweisen. Der erste Temperaturmodus kann einen 40°C-Modus und der zweite Modus kann einen 86°C-Modus darstellen. Es sei jedoch darauf hingewiesen, dass die tatsächlichen Gradzahlen an die entsprechend verwendeten Harze angepasst werden können. Daher wird nachfolgend lediglich beispielhaft auf den 40°C-Modus und den 86°C-Modus Bezug genommen. Nachfolgend wird der erste Temperaturmodus (40°C-Modus) und anschließend wird der zweite Temperaturmodus (86°C-Modus) beschrieben.

Im ersten Temperaturmodus wird die Reaktion des Harzgemisches (Verknüpfung der Moleküle) langsam in Gang gesetzt. Durch Zu- und Abschalten der Heizeinheit 150 im Wechsel (+/- 2°C des Sollwertes) wird die Temperatur durchschnittlich bei ca. 40°C gehalten. Dieser erste Temperaturmodus wird zu Beginn der Reaktion verwendet, um die Reaktionstemperatur langsam und kontrolliert ansteigen zu lassen. Vorzugsweise weist der erste Temperaturmodus eine Exothermieerkennung auf. Der zweite Temperatursensor 160 erfasst die Temperatur unmittelbar an der Reparaturstelle bzw. der zu behandelnden Stelle 400. Damit kann ein Temperaturanstieg permanent oder in Intervallen erfasst werden. Um z. B. witterungsbedingte Temperaturschwankungen ausgrenzen zu können, weist die Steuereinheit 300 einen Schwellwert-Temperaturwert auf, welcher überschritten werden muss, um die Exothermieerkennung zu aktivieren. Wenn dieser Schwellwert nicht überschritten wird (z. B. durch zu tiefe Umgebungstemperaturen), dann steuert die Steuereinheit 300 das normale vorprogrammierte Zeitintervall an und schaltet erst danach in den zweiten Temperaturmodus.

Wenn die Exothermieerkennung gestartet wird, dann kann die maximale Temperatur gespeichert werden. Bei einigen Harzgemischen kann beispielsweise die maximale Reaktionstemperatur bereits nach ca. 45 min erreicht werden, wobei die Reaktionstemperatur danach allmählich absinkt. Wenn die maximale Temperatur in 10 min. beispielsweise um mindestens 0,5 °C sinkt, dann erkennt die Steuereinheit 300, dass die Exothermie abgeschlossen ist. Wenn die Temperatur dann beispielsweise um weitere 0,2 °C fällt, dann kann die Steuereinheit 300 von dem ersten Temperaturmodus in den zweiten Temperaturmodus schalten. Durch die erfindungsgemäße Exothermieerkennung kann der erste Temperaturmodus erheblich verkürzt werden.

In dem zweiten Temperaturmodus (beispielsweise 86°C-Modus) wird das Harzgemisch vollständig ausgehärtet. Durch Zu- und Abschalten der Heizeinheit 150 im Wechsel (d. h. +/- 2°C des Sollwertes) wird die Temperatur an der Reparaturstelle oder der zu behandelnden Stelle 400 bei ca. 86°C gehalten.

Die Matte 110 kann beispielsweise eine Silikonmatte, eine PUR-Matte oder eine Matte aus einem anderen flexiblen Material darstellen.

Fig. 4 zeigt eine schematische Darstellung einer Windenergieanlage gemäß einem dritten Ausführungsbeispiel. Die Windenergieanlage weist einen Turm, eine Gondel sowie Rotorblätter 30 auf. Die Windenergieanlage weist eine Vakuumpumpe im Bereich der Gondel sowie mindestens einen Luftschlauch und eine Stromversorgung für die Heizmatte auf, welcher nach außen führbar ist und der als ein Luftschlauch für eine oben beschriebene Heizmatte dienen kann.

Im Bereich der Gondel 20 kann eine Klappe vorgesehen sein, durch welche der mindestens eine Luftschlauch hindurchgeführt werden kann. Die Windenergieanlage weist ferner eine Heizeinheit auf, wie sie gemäß dem ersten oder zweiten Ausführungsbeispiel beschrieben worden ist. Ferner kann die Windenergieanlage eine Steuereinheit zum Steuern der oben beschriebenen Heizeinheit und zum Steuern der Vakuumpumpe aufweisen.

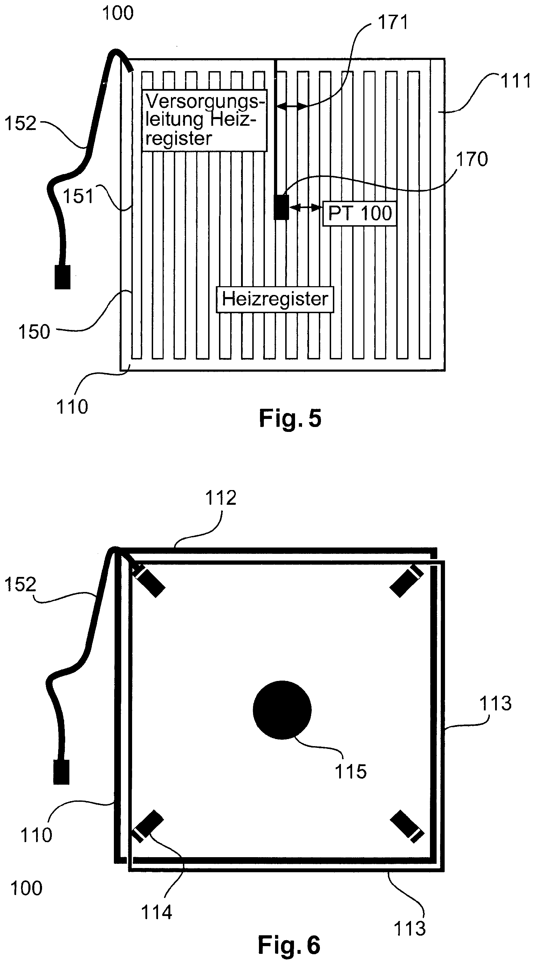

Fig. 5 zeigt eine schematische Ansicht einer Unterseite einer Heizeinrichtung gemäß einem dritten Ausführungsbeispiel. Die Heizeinrichtung gemäß dem dritten Ausführungsbeispiel kann auf einer Heizeinrichtung gemäß dem ersten Ausführungsbeispiel beruhen. Die Heizeinrichtung 100 weist eine Matte 110 mit einer elektrischen Heizeinheit 150 auf. Die Heizeinheit 150 weist einen Heizleiter 151 und eine elektrische Zuleitung 152 auf. Die Heizeinheit 150 kann beispielsweise als ein Heizregister ausgestaltet sein, wobei die Heizleitung 151 mäanderförmig in oder an der Matte 110 vorgesehen ist. Die Heizeinrichtung kann einen Temperatursensor 170 mit einer Zuleitung 171 aufweisen. Der Temperatursensor 170 kann mittig in der Heizmatte vernäht sein. Der Abstand zwischen benachbarten Windungen des Heizleiters 151 kann beispielsweise 15 mm betragen. Die elektrische Zuleitung 152 kann an einer Ecke der Heizeinrichtung eingeführt und vernäht sein, so dass der Anschluss wasserdicht ausgestaltet ist. Die Matte 110 kann an ihrem Umfang zumindest teilweise einen Abschnitt 111 ohne Heizleiter 151 aufweisen, welcher möglichst gering zu halten ist.

Fig. 6 zeigt eine schematische Ansicht der Außenseite der Heizeinrichtung gemäß dem dritten Ausführungsbeispiel. Die Heizeinrichtung 100 weist eine Matte 110 mit einer Heizeinheit 150, einer elektrischen Zuleitung 152, einer optionalen Umrandung 152, zumindest teilweise eine Befestigung z. B. in Form eines Reißverschlusses 113, eines Klettverschlusses 113 oder eines Flauschbandes, optional Schlaufen 114 zur Handhabung der Matte und optional eine Markierung 115 zum Markieren der Position des Temperatursensors 170 auf. Mittels der Reißverschlüsse 113 oder des Flauschbandes (Klettverschluss) 112 kann eine Heizeinrichtung mit einer benachbarten Heizeinrichtung verbunden werden. Die Gummiumrandung 112 dient der besseren Haftung für ein Klebeband, wenn die Heizeinrichtung beispielsweise auf einem Rotorblatt montiert wird.

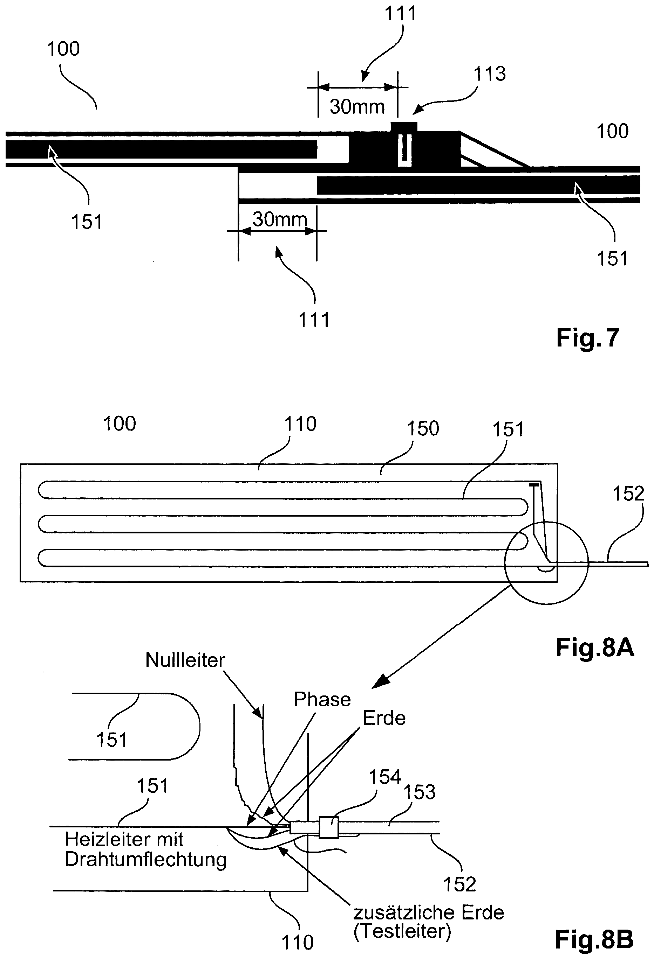

Fig. 7 zeigt eine schematische Schnittansicht einer Heizeinrichtung gemäß einem dritten Ausführungsbeispiel. In Fig. 7 sind zwei miteinander verbundene Heizeinrichtungen gezeigt. Die beiden Heizeinrichtungen werden über einen Reißverschluss 113 miteinander verbunden. Die beiden Heizeinrichtungen weisen jeweils einen Heizdraht 151 und einen Bereich 111 auf, in welchem kein Heizdraht vorgesehen ist, so dass dieser Bereich eine kalte Zone bzw. einen nicht beheizbaren Abschnitt darstellen kann.

Fig. 8a und 8b zeigen eine schematische Darstellung einer Heizeinrichtung gemäß einem vierten Ausführungsbeispiel. Die Heizeinrichtung 100 weist eine Matte 110 mit einer Heizeinheit 150 z. B. in Form eines Heizregisters auf. Die Heizeinheit 150 weist einen Heizleiter 151, welcher mäanderförmig angeordnet ist, auf. Die Heizeinrichtung weist eine elektrische Zuleitung 152 auf. Der Heizleiter 151 weist einen Draht, eine ihn umgebende Isolierung und eine Metallumschirmung z. B. in Form einer Drahtumflechtung 153 auf. Damit kann der Heizleiter einen metallischen Kern, eine Isolierung und außen herum eine Schirmung aus Metall aufweisen. Zwischen der elektrischen Zuleitung 152 und dem Heizleiter 151 kann ein (codierbarer) Stecker 154 vorgesehen sein. Der Stecker kann beispielsweise über 8 Pins verfolgen, wobei ein erster Pin mit einem Nullleiter, ein zweiter Pin mit einer Phase, ein dritter und vierter Pin jeweils mit einem Temperatursensor und ein achter Pin mit Erde (PE) verbunden ist.

Gemäß dem vierten Ausführungsbeispiel, welches auf dem ersten, zweiten oder dritten Ausführungsbeispiel beruhen kann, weist der Heizleiter 151 im Bereich der Matte auf seiner gesamten Länge eine Metallschirmung z. B. in Form einer Drahtumflechtung auf. Die beiden Enden (Eingang/Ausgang) können vorzugsweise an Erde bzw. an dem Schutzleiter angeschlossen sein.

Gemäß dem vierten Ausführungsbeispiel kann der Heizleiter bzw. der Heizdraht überwacht werden, um zu überprüfen, ob die Isolierung ordnungsgemäß vorhanden ist. Im Falle eines Defekts des Schutzleiters kann dieser Defekt optisch/akustisch ausgegeben werden. Wenn ein Fehler beim Betrieb erfolgt, dann kann dies optisch und/oder akustisch ausgegeben werden. Wenn ein Fehler vor Beginn eines Heizprozesses auftaucht, dann wird der Heizprozess nicht gestartet.

Vorzugsweise kann ein Trenntransformator zwischen der Heizeinrichtung und einem Versorgungsnetz vorgesehen sein, so dass eine galvanische Trennung vorhanden ist. Somit kann sichergestellt werden, dass es nicht zu einer Gefährdung für den Anwender kommt.

Der Trenntransformator kann in bzw. an der Heizeinrichtung bzw. der Steuerung für die Heizeinrichtung vorgesehen sein oder kann als separate Einheit zwischen der Heizeinrichtung und dem Versorgungsnetz vorgesehen sein.

Gemäß der Erfindung weist die Heizeinrichtung eine Matte aus einem textilen Gewebe auf. Die erfindungsgemäße Heizeinrichtung weist eine Heizeinheit mit einem Heizdraht auf, wobei der Heizdraht eine Isolierung beispielsweise aus Silikon und eine Metallumschirmung beispielsweise in Form eines Drahtgeflechtes aufweist. Die beiden Enden der Metallschirmung des Heizdrahtes werden mit dem Schutzleiter verbunden, so dass ein Fehlerstrom über den Schutzleiter abfließen kann.

Gemäß der Erfindung sind die elektrischen Anschlüsse der Heizeinrichtung wasserdicht ausgeführt.

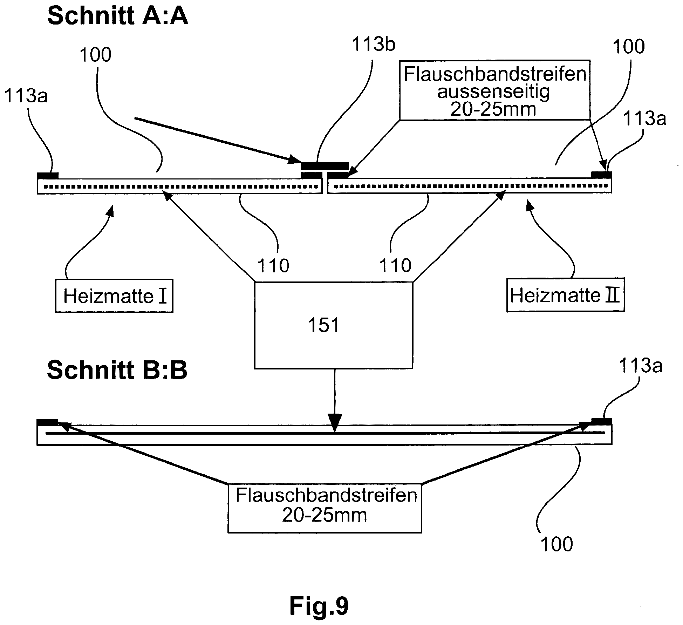

Fig. 9 zeigt eine schematische Schnittansicht einer Heizeinrichtung gemäß dem fünften Ausführungsbeispiel. Die Heizeinrichtung gemäß dem fünften Ausführungsbeispiel kann auf einem der vorhergehenden Ausführungsbeispiele beruhen. Die Heizeinrichtung 100 gemäß dem fünften Ausführungsbeispiel kann mehrere Matten 110 mit einer Heizeinheit 150 und einem Heizdraht 151 aufweisen. Die zwei Heizmatten 110 können an ihren Enden jeweils einen Flauschbandstreifen (z. B. für einen Klettverschluss) 113a aufweisen. Um zwei Heizmatten 110 miteinander zu verbinden, werden die beiden Heizmatten 110 nebeneinander platziert und ein Flauschbandstreifen 113b (z. B. für einen Klettverschluss) wird auf die benachbart angeordneten Flauschbandstreifen 113a platziert, so dass die beiden Heizmatten miteinander verbunden sind. Eine derartige Ausgestaltung könnte den Nachteil aufweisen, dass ein kälterer Abschnitt vorhanden ist, andererseits wird vermieden, dass es zu Hot Spots kommen kann, d. h. zu Bereichen, wo zwei Heizleiter übereinander angeordnet sind und die Temperatur an dieser Stelle zu groß wird.

Gemäß einem weiteren Ausführungsbeispiel der Erfindung, welches auf einem der vorstehenden Ausführungsbeispiele beruhen kann, weist die Heizmatte einen RF ID-Chip zur Identifikation auf. Die in dem RF ID-Chip gespeicherte Kennung kann durch ein Lesegerät ausgelesen werden und in einer Datenbank, beispielsweise SAP, abgelegt werden. Somit kann nachvollzogen werden, wo und wie die Heizeinrichtung eingesetzt worden ist.

## Patentansprüche

1. Heizeinrichtung zur Verwendung bei der Reparatur oder Herstellung einer Komponente einer Windenergieanlage, insbesondere eines Rotorblattes einer Windenergieanlage, mit
einer Silikonmatte (110), mit mindestens einem umlaufenden, zu einer Seite offenen Kanal (120) und einem Vakuumschlauch (121) in dem mindestens einen Kanal (120), und mindestens einer Heizeinheit (150),
wobei der mindestens eine umlaufende Kanal (120) die Matte (110) in einen ersten und zweiten Abschnitt (130, 140) aufteilt,
wobei die mindestens eine Heizeinheit (150) im Bereich des ersten Abschnitts (130) vorgesehen ist,
wobei die Luft in dem Bereich des ersten Abschnitts (130) durch den Vakuumschlauch (121) absaugbar ist,
mindestens einem ersten Temperatursensor (170) im Bereich der Heizeinheit (150) zur Erfassung der Temperatur im Bereich der Heizeinheit (150), und
mindestens einem zweiten Temperatursensor (160) in einem Bereich zwischen der mindestens einen Heizeinheit (150) und einer Reparaturstelle (400),
wobei der mindestens eine erste Temperatursensor (170) im Wesentlichen mittig im Bereich der Heizeinheit (150) vorgesehen ist,
einer Steuereinheit (300) zum Steuern der Heizeinheit (150) in Abhängigkeit der durch den ersten Temperatursensor (170) erfassten Temperatur,
wobei die Steuereinheit (300) mindestens einen ersten und zweiten Temperaturmodus aufweist, wobei die Steuereinheit (300) dazu ausgestaltet ist, in dem ersten Temperaturmodus den Betrieb der Heizeinheit (150) in Abhängigkeit der durch den ersten und/oder zweiten Temperatursensor (170, 160) erfassten Temperatur zu steuern und eine Exothermieerkennung der verwendeten Matrix vorzusehen, die Heizleistung der Heizeinheit (150) zu reduzieren, wenn eine Exothermie erkannt worden ist. ein Abklingen der Exothermie durch Überwachung der durch den ersten und/oder zweiten Temperatursensor (170, 160) erfassten Temperatur zu erkennen und von dem ersten in den zweiten Temperaturmodus zu schalten,
wobei die Steuereinheit (300) in dem zweiten Temperaturmodus dazu ausgestaltet ist, die Heizleistung der Heizeinheit (150) zu erhöhen und für ein vorbestimmtes Zeitintervall aufrecht zu erhalten.

2. Heizeinrichtung nach Anspruch 1, ferner mit
einem Vakuumanschluss-Ansaugstutzen (190) zum Anschließen eines Schlauchs (210) einer Vakuumpumpe (200), um die Luft im Bereich des ersten Abschnitts (130) abzusaugen.

3. Heizeinrichtung nach Anspruch 1, ferner mit
einer Kühleinheit im Bereich der Heizeinheit (150),
wobei die Steuereinheit (300) dazu ausgestaltet ist, den Betrieb der Kühleinheit zu steuern und die Kühleinheit zu aktivieren, wenn die durch den ersten und/oder zweiten Temperatursensor (170, 160) erfasste Temperatur zu schnell ansteigt.

4. Heizeinrichtung nach einem der Ansprüche 1 bis 3, wobei
die Heizeinheit (150) einen Heizdraht (151) und eine elektrische Zuleitung (152) aufweist,
wobei der Heizdraht (151) eine metallische Umschirmung aufweist, welche an ihren beiden Enden mit Erde verbindbar ist.

5. Verfahren zur Reparatur oder Herstellung einer Komponente einer Windenergieanlage, insbesondere eines Rotorblattes einer Windenergieanlage, mittels einer Heizeinrichtung (150), die eine Silikonmatte (110) mit mindestens einem umlaufenden zu einer Stelle offenen Kanal (120) und einen Vakuumschlauch (121) in dem mindestens einen Kanal aufweist, wobei der mindestens eine umlaufende Kanal (120) die Silikonmatte (110) in einen ersten und zweiten Abschnitt (130, 140) aufteilt, wobei die Heizeinrichtung mindestens eine Heizeinheit (150) im Bereich des ersten Abschnitts (130) aufweist, mit den Schritten:
Absaugen der Luft in dem Bereich des ersten Abschnittes (130) durch den Vakuumschlauch (121), und
Beheizen des ersten Abschnittes (130), wobei
während eines ersten Temperaturmodus:
Erfassen einer ersten Temperatur in oder an der Heizeinheit (150) und Erfassen einer zweiten Temperatur im Bereich zwischen der Heizeinheit (150) einer zu reparierenden oder zu behandelnden Stelle (400),
Steuern der Heizeinheit in Abhängigkeit der ersten und/oder zweiten Temperatur, und
Erkennung einer Exothermie der verwendeten Matrix in Abhängigkeit der ersten und/oder zweiten Temperatur und
Reduzierung und/oder Abschaltung der Heizleistung der Heizeinheit (150), wenn eine Exothermie erkannt worden ist, und
Aktivieren eines zweiten Temperaturmodus durch Erhöhen und/oder Zuschaltung der Heizleistung der Heizeinheit (150), wenn ein Abklingen der Exothermie erkannt worden ist.

## Claims

1. Heating device for use in the repair or production of a component of a wind power installation, in particular a rotor blade of a wind power installation, comprising
a silicon mat (110) with at least one peripherally extending passage (120) open to one side, and a vacuum tube (121) in the at least one passage (120), and at least one heating unit (150),
wherein the at least one peripherally extending passage (120) divides the mat (110) into a first and a second portion (130, 140),
wherein the at least one heating unit (150) is provided in the region of the first portion (130),
wherein the air in the region of the first portion (130) can be sucked away by the vacuum tube (121),
at least one first temperature sensor (170) in the region of the heating unit (150) for detecting a temperature in the region of the heating unit (150), and
at least one second temperature sensor (160) in a region between the at least one heating unit (150) and a repair location (500),
wherein the at least one first temperature sensor (170) is arranged substantially centrally in the region of the heating unit (150),
a control unit (300) for controlling the heating unit (150) depending on the temperature detected by the first temperature sensor (170),
wherein the control unit (300) comprises at least a first and second temperature mode, wherein the control unit (300) is configured in the first temperature mode to control the operation of the heating unit (150) depending on the temperature detected by the first and/or second temperature sensor (170, 160) and is configured to perform an exothermy detection of the used matrix, configured to reduce the heating power of the heating unit (150), if an exothermy has been detected, to detect a decline of the exothermy by monitoring the temperature detected by the first and/or second temperature sensor (170, 160) and to switch from the first into the second temperature mode,
wherein the control unit (300) is configured in the second temperature mode to increase a heating power of the heating element and to maintain the heating power for a predetermined time interval.

2. Heating device according to claim 1, further comprising
a vacuum connection section member (190) for connecting a tube (210) of a vacuum pump (200) to suck away the air in the region of the first portion (130).

3. Heating device according to claim 1, further comprising
a cooling unit in the region of the heating unit (150),
wherein the control unit (300) is adapted to control the operation of the cooling unit and to activate the cooling unit if the temperature detected by the first and/or second temperature sensor (170, 160) rises too quickly.

4. Heating device according to one of the claims 1 to 3 wherein
the heating unit (150) comprises a heating wire (151) and an electrical feed line (152),
wherein the heating wire (151) comprises a metallic shielding which can be connected to ground at its two ends.

5. Method of repairing or producing a component of a wind power installation, in particular a rotor blade of a wind power installation, by means of a heating device (150) which comprises a silicon mat (110) with at least one peripherally extending passage (120) which is open to one side, and a vacuum tube (121) arranged in the at least one channel, wherein the at least one peripherally extending passage (120) divides the silicon mat (110) into a first and second portion (130, 140), wherein the heating device has at least one heating unit (150) in the region of the first portion (130), comprising the steps of:
sucking away the air in the region of the first portion (130) through the vacuum tube (121), and
heating the first portion (130),
wherein in a first temperature mode:
detecting a first temperature in or at the heating unit (150) and detecting a second temperature in the region between the heating unit (150) and a repair location (400),
controlling the heating unit in accordance to the first and/or second temperature, and
detecting an exothermy of the used matrix depending on the first or second temperature and
reducing and/or switching off the heating power of the heating unit (150) when an exothermy has been detected and
activating the second temperature mode by increasing and/or switching on the heating power of the heating unit (150), when a decline of the exothermy has been detected.

## Revendications

1. Dispositif de chauffage pour l'utilisation lors de la réparation ou la fabrication d'un composant d'une éolienne, en particulier d'une pale de rotor d'une éolienne, avec
un tapis en silicone (110), avec au moins un canal (120) périphérique, ouvert vers un côté et un tuyau flexible à vide (121) dans l'au moins un canal (120), et au moins une unité de chauffage (150),
dans lequel l'au moins un canal (120) périphérique sépare le tapis (110) en une première et une seconde section (130, 140),
dans lequel l'au moins une unité de chauffage (150) est prévue dans la zone de la première section (130),
dans lequel l'air peut être aspiré dans la zone de la première section (130) par le tuyau flexible à vide (121),
au moins un premier capteur de température (170) dans la zone de l'unité de chauffage (150) pour la détection de la température dans la zone de l'unité de chauffage (150), et
au moins un second capteur de température (160) dans une zone entre l'au moins une unité de chauffage (150) et un point de réparation (400),
dans lequel l'au moins un premier capteur de température (170) est prévu sensiblement au milieu dans la zone de l'unité de chauffage (150),
une unité de commande (300) pour la commande de l'unité de chauffage (150) en fonction de la température détectée par le premier capteur de température (170),
dans lequel l'unité de commande (300) présente au moins un premier et un second mode de température, dans lequel l'unité de commande (300) est configurée afin de commander dans le premier mode de température le fonctionnement de l'unité de chauffage (150) en fonction de la température détectée par le premier et/ou le second capteur de température (170, 160) et de prévoir une reconnaissance d'exothermie de la matrice utilisée, de réduire la puissance de chauffage de l'unité de chauffage (150) lorsqu'une exothermie a été reconnue afin de reconnaître une décroissance de l'exothermie par surveillance de la température détectée par le premier et/ou le second capteur de température (170, 160) et de commuter du premier au second mode de température,
dans lequel l'unité de commande (300) est configurée dans le second mode de température afin d'augmenter la puissance de chauffage de l'unité de chauffage (150) et de la maintenir pendant un intervalle de temps prédéterminé.

2. Dispositif de chauffage selon la revendication 1, de plus avec
une tubulure d'aspiration de raccord à vide (190) pour le raccordement d'un tuyau flexible (210) d'une pompe à vide (200) afin d'aspirer l'air dans la zone de la première section (130).

3. Dispositif de chauffage selon la revendication 1, de plus avec
une unité de refroidissement dans la zone de l'unité de chauffage (150),
dans lequel l'unité de commande (300) est configurée afin de commander le fonctionnement de l'unité de refroidissement et d'activer l'unité de refroidissement lorsque la température détectée par le premier et/ou le second capteur de température (170, 160) augmente trop rapidement.

4. Dispositif de chauffage selon l'une quelconque des revendications 1 à 3, dans lequel
l'unité de chauffage (150) présente un fil de chauffage (151), et une conduite d'alimentation électrique (152),
dans lequel le fil de chauffage (151) présente un blindage métallique qui peut être relié au niveau de ses deux extrémités à la terre.

5. Procédé de réparation ou de fabrication d'un composant d'une éolienne, en particulier d'une pale de rotor d'une éolienne, au moyen d'un dispositif de chauffage (150) qui présente un tapis en silicone (110) avec au moins un canal (120) périphérique, ouvert vers un point et un tuyau flexible à vide (121) dans l'au moins un canal, dans lequel l'au moins un canal (120) périphérique sépare le tapis en silicone (110) en une première et une seconde section (130, 140), dans lequel le dispositif de chauffage présente au moins une unité de chauffage (150) dans la zone de la première section (130), avec les étapes :
l'aspiration de l'air dans la zone de la première section (130) par le tuyau flexible à vide (121), et
le chauffage de la première section (130), dans lequel
pendant un premier mode de température :
la détection d'une première température dans ou au niveau de l'unité de chauffage (150) et la détection d'une seconde température dans la zone entre l'unité de chauffage (150) au niveau d'un point (400) à réparer ou à traiter,
la commande de l'unité de chauffage en fonction de la première et/ou la seconde température, et
la reconnaissance d'une exothermie de la matrice utilisée en fonction de la première et/ou la seconde température et
la réduction et/ou l'arrêt de la puissance de chauffage de l'unité de chauffage (150) lorsqu'une exothermie a été reconnue, et
l'activation d'un second mode de température par augmentation et/ou activation de la puissance de chauffage de l'unité de chauffage (150), lorsqu'une décroissance de l'exothermie a été reconnue.
